Europäisches Patentamt

European Patent Office

Office européen des brevets

(11) Numéro de publication: **0 194 330**
**A1**

# DEMANDE DE BREVET EUROPEEN

(21) Numéro de dépôt: **85102875.3**

(22) Date de dépôt: **13.03.85**

(51) Int. Cl.⁴: **G 21 C 3/32**
**G 21 C 19/26, F 16 B 39/10**

(43) Date de publication de la demande:
**17.09.86 Bulletin 86/38**

(84) Etats contractants désignés:
**AT BE CH DE FR GB IT LI LU NL SE**

(71) Demandeur: **ATELIERS DE CONSTRUCTIONS
ELECTRIQUES DE CHARLEROI (ACEC) Société Anonyme
Avenue Lloyd George 7
B-1050 Bruxelles(BE)**

(72) Inventeur: **Fabris, Mirko
5, Rue de l'Argayon
B-1400 Nivelles(BE)**

(72) Inventeur: **Simon, André
9, Rue de Wayaux
B-6208 Les Bons Villers(BE)**

(54) Procédé de remplacement des vis d'assemblage combustible irradié et dispositif appliquant ce procédé.

(57) Le procédé de remplacement des vis de bride de serrage 2 d'assemblage combustible consiste à dégager, à l'aide d'une électrode d'électroérosion travaillant par défoncement, des pattes de sertissage 23 servant à immobiliser la queue 27 d'une coupelle 26 rabattue dans des empreintes 29 de la vis de remplacement 28.

Ces opérations sont conduites à l'aide d'un dispositif constitué d'une plaque de guidage située à la base et servant à l'amarrage du dispositif sur l'assemblage combustible, au positionnement des outillages et à l'évacuation des déchets en provenance des usinages vers un tube central de grande longueur servant à la fois à l'aspiration de l'eau et au positionnement de plateaux de guidage disposés à espacements réguliers pour soutenir les corps d'outils de grande longueur à l'aide de paliers appropriés.

Fig. 5

## PROCEDE DE REMPLACEMENT DES VIS D'ASSEMBLAGE COMBUSTIBLE IRRADIE ET DISPOSITIF APPLIQUANT CE PROCEDE.

L'invention concerne un procédé de remplacement des vis des brides de serrage d'un assemblage combustible irradié et immergé dans une piscine de désactivation. Ce procédé consiste à dégager par usinage, dans les environs immédiats de la vis à remplacer, des pattes de sertissage servant à immobiliser une coupelle rabattue sur la vis de remplacement.

L'invention concerne également un dispositif conçu pour la mise en oeuvre du procédé. Ce dispositif comprend principalement une plaque de guidage située à sa base et servant à amarrer le dispositif sur l'assemblage, à positionner les différents outillages et à véhiculer les déchets provenant des usinages vers un tube central, de grande longueur, servant à la fois à l'aspiration de l'eau et au positionnement de plateaux de guidage soutenant à l'aide de paliers les corps d'outils de grande longueur.

Dans les équipements des centrales nucléaires, chaque vis est prémunie contre le désserrage accidentel et la séparation de la tête en cas de rupture. L'un des moyens communément utilisés consiste à enfoncer une broche dans une encoche de la tête de vis et d'en souder les extrémités sur la pièce immédiatement adjacente à la tête de la vis.

Il peut arriver qu'une rupture de vis nécessite son remplacement, voire même, par précaution élémentaire, le remplacement de toute une série de vis susceptibles de casser à leur tour. Pour des raisons évidentes de sécurité ces nouvelles vis doivent être indésserrables et inséparables de la bride de serrage. Ces deux critères ont empêché jusqu'à présent le remplacement de ces vis et ont conduit à la disqualification de nombreux assemblages combustibles.

La présente invention a pour but de remédier à ces inconvénients. Le procédé tel qu'il est caractérisé dans les revendications consiste à dégager la vis cassée en détruisant les points de soudure, qui retiennent les extrémités de la broche au chambrage de la vis, à l'aide d'une fraise en forme de cloche puis à usiner par électro-érosion des pattes de sertissage servant à immobiliser la queue d'une coupelle dont le bord supérieur de la partie cylindrique est rabattu sur la

16.22/1940.

tête de vis.

Ce procédé se réalise entièrement sous eau ; il s'applique non seulement lors d'un remplacement accidentel d'une vis cassée mais également lors d'une campagne visant au remplacement d'une qualité de vis jugée mal adaptée à certaines conditions d'exploitation.

Le dispositif tel qu'il est caractérisé dans les revendications consiste à disposer à sa base une plaque de guidage munie de broches rétractables, servant à amarrer le dispositif sur l'assemblage, de trous de guidage, servant à positionner les outillages, et des canaux d'évacuation véhiculant les déchets et copeaux d'usinage vers un tube central d'aspiration sur lequel à intervalles réguliers sont disposés des plateaux de guidage munis de paliers alignés sur les trous de guidage pour soutenir les corps d'outils de grande longueur à l'aide de manchons disposés à hauteur voulue.

L'invention est exposée plus en détails, ci-après, à l'aide des figures suivantes

- La figure 1 représente une vue en plan de la partie supérieure d'un assemblage

- La figure 2 est une vue en plan d'une bride de serrage servant au maintien d'un ressort à lame

- La figure 3 est une vue en coupe de la coupelle

- La figure 4 est une coupe transversale de la queue de la coupelle et des pattes de sertissage

- La figure 5 est une coupe en élévation de la nouvelle vis

- La figure 6 est une vue en plan de la partie inférieure du dispositif

- La figure 7 est une vue en élévation avec coupe partielle de la partie inférieure du dispositif.

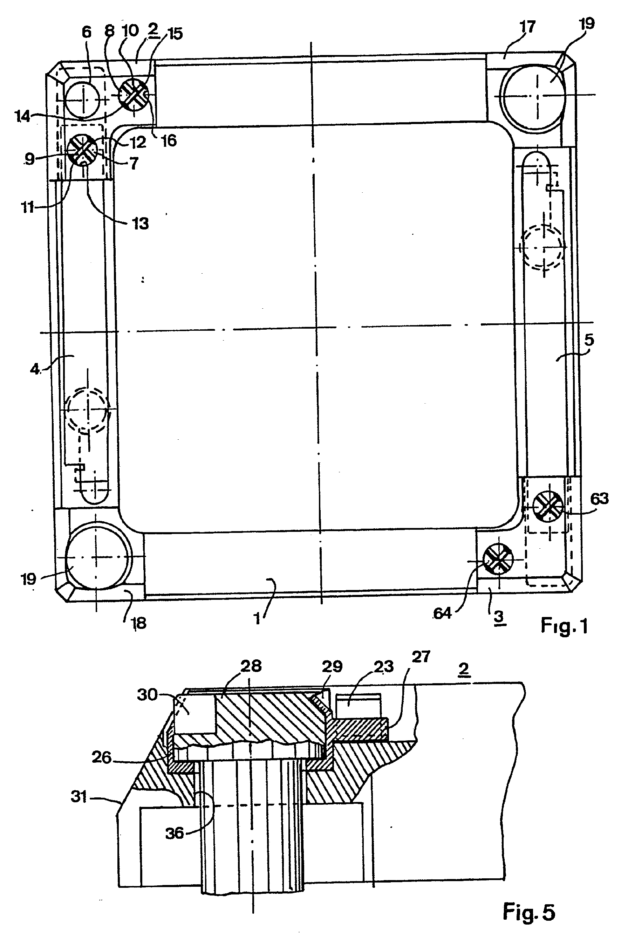

La figure 1 montre un cadre 1, de forme carrée, situé à la partie supérieure de l'assemblage et portant deux brides de serrage 2 et 3 disposées dans deux coins opposés du cadre 1 pour assurer le maintien de deux ressorts à lame 4 et 5. La bride 2 munie d'un trou supplémentaire faisant office d'un détrompeur 6 est maintenue par des vis 7 et 8 dont les têtes portent des empreintes en forme de croix. Dans l'une des empreintes de la vis 7 est engagée une broche 9 dont les deux extrémités 11 et 12 sont soudées dans un chambrage 13. De même une empreinte de la vis 8 reçoit une broche 10 soudée par ses deux extrémités 14 et 15 à un chambrage 16.

Les deux autres coins du cadre 1 sont occupés par des rehaussement 17 et 18 solidaires du cadre 1 et de même épaisseur que les brides de serrage 2 et 3 de manière à constituer quatre surfaces de pose appartenant à un même plan horizontal. Ces rehausements 17 et 18 sont percés de trous de localisation 19.

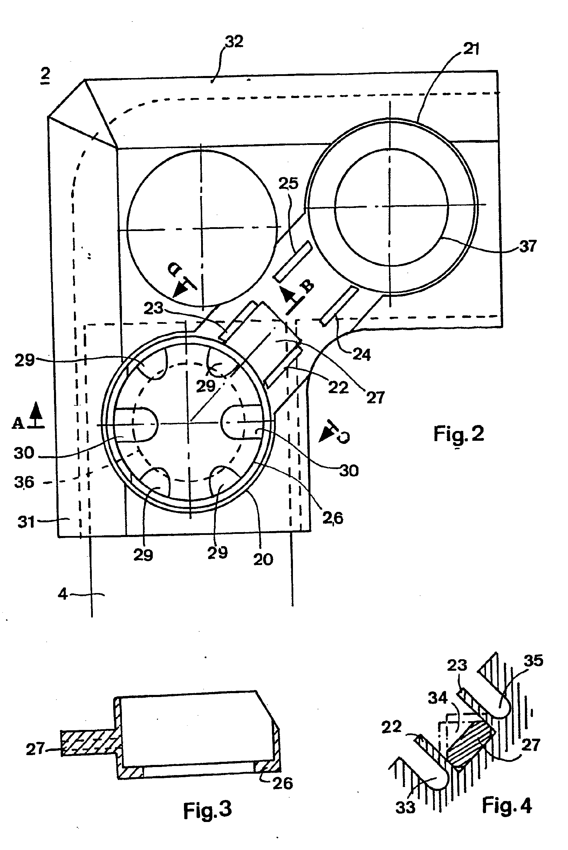

La figure 2 montre la bride de serrage 2 après une série d'opérations d'usinage qui seront détaillées ultérieurement. Ces opérations sont successivement : libérer les têtes de vis en détruisant par fraisage les points de soudure qui retiennent les broches dans les chambrages, former des chambrages 20 et 21 de plus grand diamètre et dégager par électro-érosion des pattes de sertissage 22,23,24,25 dans la masse de la bride de serrage 2.

Sur la figure 2 sont également représentés, une coupelle 26 munie d'une queue 27 et une vis de remplacement 28 vissée dans le chambrage 20. La vis de remplacement 28 a des empreintes 29, dans lesquelles viendront s'encastrer le bord supérieur de la coupelle 26 lorsqu'il sera rabattu, et des empreintes 30 utilisées pour le vissage et le dévissage.

La bride de serrage 2 a des chanfreins 31 et 32 destinés à faciliter la mise en place des assemblages voisins.

La figure 3 montre une coupe selon la section AB de la coupelle 26 et de sa queue 27. Cette coupelle 26, introduite dans le chambrage 20, est orientée de manière que la queue 27 vienne se déposer entre les deux pattes de sertissage 22 et 23. La partie cylindrique de la coupelle 26 est partiellement amputée sur le secteur disposé le long du chanfrein 31 de la figure 2.

La figure 4 montre une coupe selon la section CD de la queue 27 et des pattes de sertissage 22 et 23. Ces pattes ont été obtenues par électro-érosion à l'aide d'une électrode dont la forme a permis le défoncement simultané des encoches 33, 34 et 35 selon une largeur et une profondeur permettant à la queue 27 d'être retenue par rapprochement des pattes 22 et 23.

La même technique peut être répétée pour dégager les pattes 24 et 25 mais il est avantageux de disposer d'une électrode permettant de dégager en une seule opération les quatre pattes de sertissage 22,23,24 et 25. Cette opération d'ensemble se justifie d'autant mieux que la plus élémentaire prudence commandera, en cas de rupture d'une vis de la bride de serrage, de remplacer les deux vis assurant la fixation de cette bride de serrage.

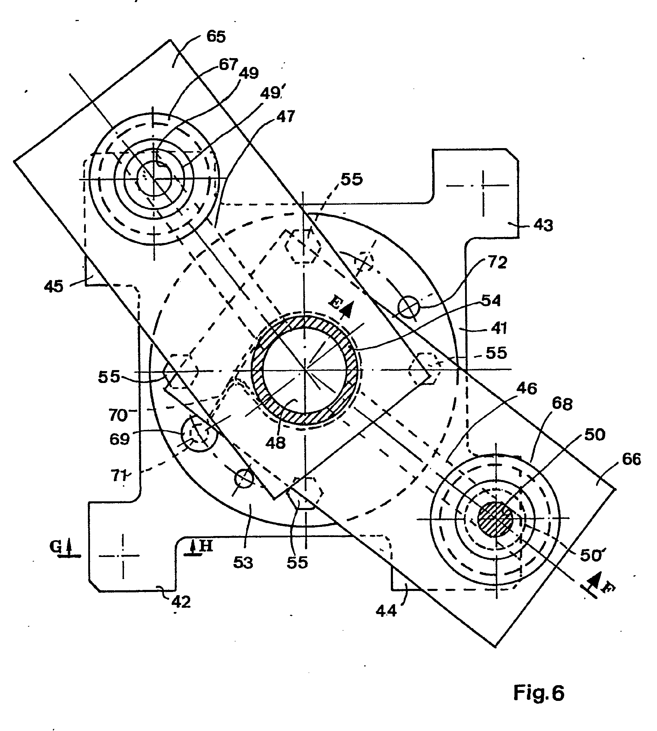

La figure 5 représente une coupe en élévation suivant la section AB d'une partie de la bride de serrage 2 après mise en place de la vis de remplacement 28 et rabattement du bord supérieur de la coupelle 26 pour s'insérer dans l'empreinte 29 de la vis de remplacement 28.

La figure 5 montre également la patte de sertissage rabattue, comme suggéré en figure 4, pour retenir la queue 27.

On peut constater que la vis de remplacement 28 est préservée à la fois contre le désserrage accidentel et contre la séparation de la tête de la bride de serrage en cas de rupture de vis.

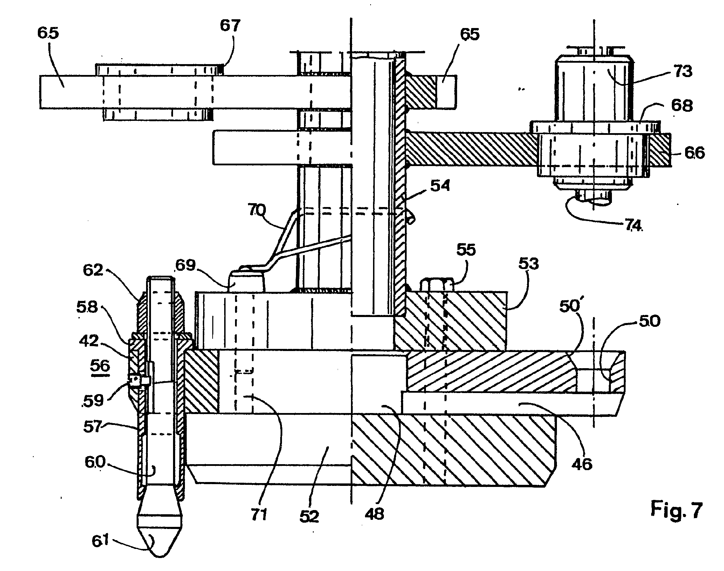

Le dispositif utilisé pour la mise en oeuvre du procédé est représenté dans sa partie inférieure par les figures 6 et 7.

Un dispositif d'intervention 40 pour le remplacement des vis des assemblages immergés comprend une plaque de guidage 41 se présentant sous l'allure générale d'un carré dont les angles sont renforcés par des éléments de coin. Ces quatre éléments de coin se répartissent en une première paire d'éléments de positionnement 42 et 43 du dispositif 40 et en une seconde paire d'éléments de guidage 44 et 45 des outillages. Pour une bonne compréhension de la figure 7 il faut remarquer qu'elle représente dans sa partie droite une coupe en élévation faite suivant l'axe EF et que dans sa partie gauche apparaît une coupe partielle faite suivant l'axe GH.

La plaque guide 41 est munie de deux canaux d'évacuation 46 et 47 réunissant une chambre centrale 48 à la périphérie de la plaque guide en passant chacun par un trou de guidage 49 pour l'élément de guidage 45 et par un trou de guidage 50 pour l'élément de guidage 44. Le trou de guidage 49 porte un chanfrein 49' et le trou de guidage 50 porte un chanfrein 50' qui servent à faciliter le centrage des outillages au droit des vis pour lesquelles il faut intervenir.

Un bouchon 52 de forme carrée disposé sous la plaque de guidage 41 rattache celle-ci à un plateau rond servant de pied 53 à un tube central d'aspiration 54 à l'aide de quatre vis 55.

Ce bouchon 52 se pose sur le cadre 1 de la figure 1 tandis que les deux éléments de guidage 44 et 45 se posent sur les brides de serrage 2 et 3 et que les deux éléments de positionnement 42 et 43 se posent sur les rehausements 17 et 18.

L'accrochage du dispositif 40 au cadre 1 se fait à l'aide de deux brides rétractables 56 insérées dans les trous de localisation 19. Chaque broche rétractable 56 est composée d'une douille fendue 57 retenue, dans le cas de la figure 7 par une collerette 58, à l'élément de positionnement 42 et fixée à celui-ci par une vis 59. Dans cette douille fendue 57 coulisse une broche 60 munie d'un bout en forme de deux troncs de cônes associés par la base et appelé épanouissement 61. L'autre extrémité de la broche 60 est filetée de manière à collaborer avec un écrou 62 servant à remonter la broche 60 de façon que l'épanouissement 61 déforme la douille fendue 57 et assure son coincement dans l'alésage cylindrique d'un trou de localisation 19.

Le trou de guidage 49 de la figure 6 est coaxial de la vis 8 de la figure 1. De même le trou de guidage 50 est coaxial d'une vis 63 contribuant avec une autre vis 64 à la fixation de la bride de serrage 3 sur le cadre 1.

Le tube central d'aspiration 54 sert aussi de support à des plateaux de guidage 65 et 66. Le plateau de guidage 65 est équipé d'un palier 67, coaxial au trou de guidage 49, qui sert à maintenir l'alignement des corps d'outils de grande longueur. Le plateau de guidage 66 est équipé d'un palier 68 coaxial au trou de guidage 50.

Le dispositif 40 peut occuper deux positions distinctes décalées l'une de l'autre de 180° par rotation autour de l'axe du tube central d'aspiration 54. Une première position, correspondant à celle de la figure 6, permet de travailler sur les vis 63 et 8. L'autre position, obtenue après rotation de 180°, donne accès aux vis 64 et 7.

Le long du tube central d'aspiration 54 sont positionnés à intervalles réguliers plusieurs paires de plateaux de guidage, semblables aux plateaux de guidage 65 et 66, pour assurer le bon alignement des corps d'outils sur toute la hauteur du dispositif 40 qui émerge à plusieurs mètres au dessus du pied 53 du tube central d'aspiration 54.

D'autre part le pied 53 peut être déplacé en rotation par rapport à la plaque de guidage 41 de manière à écarter les plateaux de guidage 65 et 66 des éléments de guidage 44 et 45 pour donner l'accès à certains outillages ne pouvant pas s'aligner au droit des plateaux de guidage.

De façon à repérer les différentes positions du pied 53 par rapport à la plaque de guidage 41 une broche 69 maintenue par une chaînette 70 s'enfonce dans différents trous tels que des trous 71 ou 72.

La partie émergée du tube central d'aspiration 54 assure le positionnement d'une table de travail servant au centrage de l'extrémité supérieur de l'outillage utilisé. Cette partie émergée du tube eentral d'aspiration 54 porte également un coude qui détourne la canalisation d'eau vers une pompe et un filtre avant de la rejeter dans la piscine.

Le long du corps d'outil des manchons de diamètre approprié sont disposés à intervalles réguliers de manière à s'appuyer sur les paliers des plateaux de guidage.

Par exemple le palier 68 sert de guide à un manchon 73 monté le long d'un corps d'outil 74.

De manière à éviter de souiller l'assemblage dont on veut changer les vis des brides de serrage, on dépose un petit godet de forme carrée à l'intérieur du cadre un peu en contre-bas de celui-ci en s'appuyant sur le dessus de la grille supérieure de l'assemblage.

Dans le même souci d'éviter toute pollution de la piscine par des déchets d'usinage, l'aspiration est renforcée par l'obturation de l'un des canaux d'évacuation 46 ou 47. En consédérant le dispositif 40 dans la position de la figure 6, l'intervention peut se faire soit sur la vis 8 soit sur la vis 63.Si par exemple l'opération envisagée affecte la vis 63 l'introduction, depuis la périphérie de l'élément de guidage 45, d'une plaque obturatrice dans le canal d'évacuation 47, favorise l'aspiration dans l'autre canal d'évacuation 46 aboutissant aux environs immédiats de l'usinage de la vis 63.

La succession des opérations dans l'exemple d'une intervention sur la vis 63 supposée cassée au ras de la tête de vis se fera de la manière suivante.

Après l'obturation du canal d'évacuation 47 par une plaque obturatrice, le dispositif 40 est descendu pour se poser sur le cadre 1 et arrimé à celui-ci par les broches rétractables 56 dont les douilles 57 seront introduites dans les trous de localisation 19 de manière à occuper la position représentée en figure 6. Une fraise en cloche, disposée en bout d'un corps d'outil de grande longueur tel que représenté partiellement par la référence 74 en figure 7 portant à intervalles réguliers des manchons 73 s'appuyant sur les paliers 68 des plateaux de guidage 66 disposés le long du tube central d'aspiration 54, est actionnée, depuis la surface à l'aide d'un outillage positionné sur la table de travail, pour détruire les points de soudure solidarisant la tête de vis à son chambrage par l'intermédiaire d'une broche enfoncée dans la tête de vis et soudée à ses deux extrémités. Le même outillage sert également à agrandir le chambrage de la vis.

A l'aide d'un tournevis adapté à la forme de la tête de vis on procède alors au dévissage de la vis. Evidemment dans l'hypothèse où la vis 63 est cassée au ras de la tête la rotation de la tête ne fait pas remonter la vis hors du chambrage et ne permet pas à une pince à machoires parallèles prévue pour enlever la vis de mener à bien cette opération.

Il faut à ce stade intervenir avec un outil portant un embout sous forme de douille fendue qui se glisse entre la tête de vis et le nouveau chambrage puis se referme sur la tête de vis à l'aide d'une bague coulissante, déplacée vers le bas le long de la douille fendue. Après l'enlèvement de la tête de vis de son chambrage, le déplacement vers le haut de la bague coulissante libère la tête de vis qui est déposée dans un container de plomb prévu à cet effet.

Le dégagement du fût de la vis 63 impose d'abord la formation d'une empreinte de forme carrée à l'aide d'une électrode de forme appropriée d'une machine d'électro-érosion travaillant par défoncement. L'extraction du fût de la vis peut alors s'opérer à l'aide d'un embout adapté à l'empreinte réalisée. Le fût de vis entièrement dévissé sera saisi par la pince à machoires parallèles pour être déposé à son tour dans le container de plomb.

Si l'opération envisagée vise au seul remplacement de la vis cassée 63, il faudra alors usiner les deux pattes de sertissage dans la bride de serrage. Dans ce cas on remonte d'abord le dispositif 40 pour déplacer le pied 53 par rapport à la plaque de guidage 54 pour positionner correctement l'électrode d'électro-érosion. Le dispositif 40 sera alors redescendu pour permettre à l'électrode de dégager par défoncement les deux pattes de sertissage. Cette opération terminée le dispositif 40 sera à nouveau remonté pour remettre le pied 53 et la plaque de guidage 54 dans leur position d'origine de manière qu'une fois le dispositif 40 redescendu on puisse mettre en place la coupelle en glissant sa queue entre les deux pattes de sertissage puis la vis qui sera vissée avec un couple déterminé. Les dernières opérations consisteront à rabattre le bord supérieur de la coupelle sur les empreintes de vis et à retenir la queue de la coupelle à l'aide des pattes de sertissage rabattues.

En réalité le remplacement d'une vis cassée à une bride de serrage impose par prudence le remplacement des deux vis retenant cette bride de serrage. Dans le cas d'une rupture de la vis 63 on procédera également au remplacement de la vis 64.

Dans ce cas on utilisera une électrode d'électro-érosion permettant de dégager simultanément les pattes de sertissage.

A cette seule exception près le déroulement des opérations précédemment décrite sera strictement identique jusqu'à la mise en place définitive de la vis remplacant la vis cassée 63. Cette suite d'opération se poursuivra en remontant le dispositif 40 pour qu'après rotation de 180° les trous de guidage 49 et 50 se présentent au droit des vis 9 et 64. Le dégagement et le remplacement de la vis 64 se conduisant d'une manière identique à ceux mentionnés pour la vis 63.

Il faut remarquer enfin que pour échapper à la disqualification des assemblages sur lesquels des ruptures de vis ont été constatées, il faudra remplacer les vis des deux brides de serrage. Dans ce cas, les opérations seront conduites sur les vis 8 et 63 en conservant le dispositif 40 dans la position représentée en figure 6 mais en le remontant pour modifier la disposition de la plaque obturatrice selon le canal d'évacuation utilisé.

Une rotation de 180° du dispositif 40 donnera accès aux vis 9 et 64 qui seront soumises à la même succession d'opérations.

On remarque que ce procédé établi une suite d'opérations qui évitent de travailler sur les deux vis d'une même bride de façon a toujours maintenir les ressorts à lame 4 et 5.

REVENDICATIONS.

1. Procédé de remplacement des vis (7,8 ; 63,64) des brides de serrage (2 et 3) d'un cadre (1) appartenant à la tête d'un assemblage irradié et immergé dans lequel les dites vis (7,8 ; 63,64) sont dégagées des points de soudure retenant les extrémités des broches (9,10) insérées dans les têtes des vis (7,8) au chambrage (13,16) de l'étrier (2) caractérisé en ce que les vis de remplacement (28) sont retenues par une coupelle (26) dont le dessus de la partie cylindrique est rabattu sur la tête de vis et dont une autre partie (27) est par des moyens (22,23) constitués ultérieurement, rendue solidaire de la bride de serrage (2) d'une manière indétachable c'est-à-dire qu'en cas de rupture de la vis, la tête de vis ne se sépare pas de la bride de serrage.

2. Procédé selon la revendication 1, caractérisé en ce que la coupelle (26) est munie d'une queue (27) solidarisée à la bride de serrage (2) de manière indétachable par au moins une patte de sertissage (22 et/ou 23) usinée dans la masse de la bride de serrage (2).

3. Procédé selon la revendication 2, caractérisé en ce que la ou les pattes de sertissage (22 et/ou 23) sont obtenues par usinage à l'aide d'une électrode d'électro-érosion travaillant par défoncement.

4. Procédé selon une des revendications précédentes, caractérisé en ce qu'entre l'usinage de deux nouveaux chambrages (20, 21) de plus grand diamètre, destinés à recevoir les vis de remplacement (28), s'intercale l'usinage en une seule opération à l'aide d'une électrode d'électro-érosion travaillant par défoncement des pattes de sertissage (22,23 ; 24,25), servant à retenir de manière indétachable les coupelles (26) qui seront ultérieurement insérées dans les dits nouveaux chambrages (20,21).

5. Dispositif (40) appliquant le procédé revendiqué dans les revendications précédentes, caractérisé en ce qu'il est constitué d'une plaque de guidage (41) munie de broches rétractables (56) servant à amarrer le dispositif (40), de trous de guidage (49,50) servant à positionner les outillages, et

16.22/1940.

de canaux d'évacuation (46,47) véhiculant les déchets d'usinage vers un tube central d'aspiration (54)

et en ce que le tube central d'aspiration (54) sert à positionner des plateaux de guidage (65,66) munis de paliers (67,68) alignés sur les trous de guidage (49,50) et servant à soutenir à intervalles réguliers les corps d'outils (74) de grande longueur, à l'aide de manchons (73) disposés à hauteur voulue.

6.     Dispositif selon la revendication 5 caractérisé en ce que la position du plateau de guidage (65,66) le long du tube central d'aspiration (54) et la position des trous de guidage (49,50) dans la plaque de guidage (41) sont telles qu'en amarrant le dispositif (40) à l'aide des broches rétractables (56) on peut obtenir deux positions, du dispositif (40) par rapport au cadre(1), décalées l'une de l'autre de 180°, la première position permettant aux outillages d'accéder à une vis (8 ou 63) de chaque bride de serrage (2 ou 3), la seconde position permettant aux outillages d'accéder à l'autre vis (9 ou 64) de chaque bride de serrage (2 ou 3).

7.     Dispositif selon la revendication 6, caractérisé en ce que les canaux d'évacuation (46,47) débouchent en périphérie de la plaque de guidage (41) en passant au droit des trous de guidage (49,50)

et en ce que le canal d'évacuation désservant le trou de guidage non utilisé pour des opérations d'usinage en cours est obstrué par une plaque obturatrice insérée depuis la périphérie de la plaque de guidage (41).

8.     Dispositif selon une des revendications précédentes, caractérisé en ce qu'un pied (53) solidaire du bout inférieur du tube central d'aspiration (54) peut se déplacer par rapport à la plaque de guidage (41)

et en ce que les différentes positions relatives du pied et de la plaque de guidage sont repérées par une broche (70) s'insérant dans des trous (71 ou 72).

Fig. 1

Fig. 5

1/4    0194330

Fig.2

Fig.3

Fig.4

**Fig.6**

Fig. 7

**0194330**

Numero de la demande

**RAPPORT DE RECHERCHE EUROPEENNE**

Office européen
des brevets

EP 85 10 2875

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | FR-A-2 420 826 (C.E.A.)<br>* Page 7, lignes 26-39; page 8, lignes 1-38; page 9, lignes 1-13; figures 1,2,11; page 13, lignes 26-35 * | 1 | G 21 C 3/32<br>G 21 C 19/26<br>F 16 B 39/10 |
| A | | 2 | |
| Y | CH-A- 620 022 (SULZER)<br>* Page 2, colonne de droite, lignes 4-21; figures 1-3 * | 1 | |
| A | FR-A-2 407 384 (KRAFTWERK UNION)<br>* Page 5, lignes 21-34; figures 5,6,9,10 * | 1,2 | |
| A | DE-B- 345 621 (STADLER)<br>* Page 3, lignes 1-16; figures 1,2 * | 1,2 | **DOMAINES TECHNIQUES RECHERCHES (Int. Cl.4)**<br><br>G 21 C 3/00<br>G 21 C 19/00<br>F 16 B 39/00 |
| A | DE-A-1 172 479 (VEB)<br>* Revendication; figures 1-4 * | 1,2 | |
| A | GB-A-2 115 599 (WESTINGHOUSE)<br>* Page 4, lignes 106-130; page 5, lignes 26-130; page 6, lignes 1-8; figures 11-18,21 * | 5 | |

−/−

Le présent rapport de recherche a été établi pour toutes les revendications

| Lieu de la recherche | Date d'achèvement de la recherche | KAVCIC Examinateur |
|---|---|---|
| LA HAYE | 15-11-1985 | |

Office européen
des brevets

**RAPPORT DE RECHERCHE EUROPEENNE**

EP 85 10 2875

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | EP-A-0 109 902 (FRAMATOME)<br>* Page 18, lignes 16-34; page 19, lignes 1-10; figure 9 * | 5 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | | KAVCIC Examinateur |
|---|---|---|---|
| LA HAYE | 19.08.1985 | | |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82